# EUROPEAN PATENT SPECIFICATION

(11) **EP 3 405 825 B1**
(45) Date of publication and mention of the grant of the patent: **01.09.2021**
(21) Application number: 17701302.6
(22) Date of filing: 19.01.2017
(51) Int. Cl.: G02B 6/38

(54) **TELECOMMUNICATIONS PANEL ASSEMBLY**
TELEKOMMUNIKATIONSTAFELBAUGRUPPE
ENSEMBLE PANNEAU DE TÉLÉCOMMUNICATIONS

(30) Priority: 20.01.2016 US 201662280768 P
(43) Date of publication of application: 28.11.2018
(73) Proprietor: CommScope Connectivity Belgium BVBA, 3010 Kessel-Lo (BE)
(72) Inventor: GEENS, Johan, 3380 Bunsbeek (BE); VERMEULEN, Pieter, 2260 Westerlo (BE); ALAERTS, Roger, 3200 Aarschot (BE); VOS, Bart, 2440 Geel (BE)
(74) Representative: Murgitroyd & Company
(86) International application number: PCT/EP2017/051050
(87) International publication number: WO 2017/125473

(56) References cited:
- WO-A1-2014/009344
- US-A1- 2009 232 455
- US-A1- 2010 129 039
- US-A1- 2013 108 231

## Description

### Technical Field

This disclosure relates to fiber optic termination panels.

### Background

With respect to telecommunications cable termination panels, there is an ever increasing need to increase density. The cable termination panels of the prior art include adapters, which hold mating connectors of a fiber optic transmission pathway.

By increasing density, more terminations can be located in a given area, such as on a rack or in a cabinet. However, by increasing the density, connector access becomes more difficult for a technician needing to make a new connection, or make a disconnection, such as to clean a connector, or move to a new adapter. Certain prior art systems such as those shown in US 2010/129039 A1, WO 2014/009344 A1, US 2013/108231 A1, and US 2009/232455 A1 include adapter mounting modules.

### Summary

The present invention concerns a telecommunications panel assembly as defined in appended claim 1. According to certain examples, the fiber optic adapters may be provided as adapter blocks that are formed from a plurality of adapters integrally molded into the block.

According to one example, the fiber optic adapter blocks are mounted to the modules generally horizontally along a front-to-back/back-to-front direction. According to certain examples, the mounting direction of the fiber optic adapter blocks are generally parallel to the longitudinal adapter axes of the individual adapters.

According to certain examples, at least one of the adapter mounting modules may be pivotally or rotatably mounted with respect to another module at a different row about a horizontal rotation axis extending parallel to the top and bottom, and transversely to the sides of the chassis for improved connector access. According to one example, one of the adapter mounting modules may also be liftable with respect to another module at a different row for improving access to the back side of the adapter module of the lower row.

The chassis may include slidably mounted cable management structures associated with each of the rows of adapter mounting modules for guiding cables to a larger radius limiter at one of the sides, adjacent to the front of the chassis.

According to certain examples, the adapters or the adapter blocks are mounted parallel to the sides of the chassis, with each of the individual adapters defining parallel adapter axes. It is also contemplated that the adapters may be mounted at an angle to the adapter mounting modules to direct the cables extending therefrom toward the radius limiter at one of the sides of the chassis in certain embodiments.

According to one example, the telecommunications panel assembly comprises a chassis including a front, the chassis further defining a top, a bottom, and two sides. A plurality of adapter mounting modules are mounted to the chassis at the front, each adapter mounting module defining a first wall separated from a second opposing parallel wall by an opening, each adapter mounting module defining at least one adapter mounting location configured to slidably receive at least one adapter block defining a plurality of fiber optic adapters in an insertion direction. The at least one adapter mounting location defines a flexible cantilever arm at the first wall for latching with the at least one adapter block and a corresponding third wall extending perpendicularly from the second wall toward the flexible cantilever arm, the third wall defining a keying slot for orienting the at least one adapter block in the correct orientation for insertion into the adapter mounting module, the third wall also defining a positive stop surface for limiting further movement of the at least one adapter block in the insertion direction.

According to another example, outside the scope of the present invention, the disclosure is directed to an adapter block receiving module comprising a first wall separated from a second opposing parallel wall by an opening, at least one adapter mounting location configured to slidably receive at least one adapter block defining a plurality of fiber optic adapters in an insertion direction, wherein the at least one adapter mounting location defines a flexible cantilever arm at the first wall for latching with the at least one adapter block and a corresponding third wall extending perpendicularly from the second wall toward the flexible cantilever arm, the third wall defining a keying slot for orienting the at least one adapter block in the correct orientation for insertion into the module, the third wall also defining a positive stop surface for limiting further movement of the at least one adapter block in the insertion direction.

According to yet another example, also outside the scope of the present invention, the disclosure is directed to a method of latching an adapter block defining a plurality of fiber optic adapters to a module configured to be mounted to a further telecommunications fixture, wherein the module defines a first wall separated from a second opposing parallel wall by an opening, the method comprising orienting the adapter block in a mounting orientation so as to clear a keying slot defined by a third wall extending perpendicularly from the second wall, sliding the adapter block in an insertion direction so as to clear the keying slot and flexing a cantilever arm of the module toward the first wall until the cantilever arm clears the adapter block and flexes back toward the second wall, wherein the cantilever arm is positioned opposite the third wall, and abutting the adapter block with a positive stop surface defined by the third wall to limit further movement of the adapter block in the insertion direction.

### Brief Description of the Figures

FIG. 1 is a front, top, left side perspective view of a telecommunications panel assembly in accordance with the principles of the present disclosure;
FIG. 2 is a front, top, right side perspective view of the telecommunications panel assembly of FIG. 1;
FIG. 3 illustrates the telecommunications panel assembly of FIG. 1 with an upper adapter mounting module of the assembly positioned at a raised configuration;
FIG. 4 shows the assembly of FIG. 3 with one of the lift supports of the adapter mounting module in phantom lines to illustrate the positive stop features of the pivot pin of the adapter mounting module;
FIG. 4A is a close-up view of a portion of the assembly of FIG. 4 illustrating the pivotable coupling of the lift support to the adapter mounting module;
FIG. 5 illustrates the telecommunications panel assembly of FIG. 3 with the upper adapter mounting module of the assembly positioned at a raised configuration from a right perspective view;
FIG. 6 illustrates the telecommunications panel assembly of FIG. 3 with the upper adapter mounting module of the assembly positioned at a raised configuration from a front view;
FIG. 7 is a cross-sectional view taken along line 7-7 of FIG. 6;
FIG. 8 illustrates the telecommunications panel assembly of FIG. 3 with the upper adapter mounting module of the assembly positioned at a raised configuration from a top view;
FIG. 9A is a cross-sectional view taken along line 9A-9A of FIG. 8;
FIG. 9B is a cross-sectional view similar to that of FIG. 9A, illustrating the pivot range of the upper adapter mounting module with respect to the lift supports of the module;
FIG. 10 illustrates the telecommunications panel assembly of FIG. 1 with the upper adapter mounting module of the assembly positioned at a lowered/neutral configuration from a top view;
FIG. 11 is a cross-sectional view taken along line 11-11 of FIG. 10;
FIG. 12 is a cross-sectional view similar to that of FIG. 11, illustrating the frictional interaction of the upper and lower adapter mounting modules when either of the modules is pivoted with respect to the other;
FIG. 13 illustrates a front, top, right side perspective view of a telecommunications panel assembly having features similar to those of the panel of FIGS. 1-12, the telecommunications panel assembly having features that are examples of inventive aspects in accordance with the principles of the present disclosure;
FIG. 14 illustrates one of the adapter mounting modules of the telecommunications panel assembly in isolation, the adapter mounting module shown in an empty configuration;
FIG. 15 illustrates the adapter mounting module of FIG. 14 in a fully loaded configuration with adapter blocks mounted therein;
FIG. 16 illustrates the adapter mounting module of FIG. 15 with one of the adapter blocks exploded thereoff;
FIG. 17 is a close-up view of a portion of the adapter mounting module of FIG. 16;
FIG. 18 illustrates one of the adapter mounting modules of FIGS. 14-17 with the cable management structures thereof being mounted thereto;
FIG. 19 illustrates the adapter mounting module of FIG. 18 from a bottom perspective view;
FIG. 20 is a close-up view of a portion of the adapter mounting module of FIG. 19;
FIG. 21 illustrates the adapter mounting module of FIGS. 18-20 fully populated with the cable management structures;
FIG. 22 is a close-up view of a portion of the adapter mounting module of FIG. 21;
FIG. 23 illustrates one of the adapter mounting modules of FIGS. 14-22 with two of the adapter blocks removed and two of the cable management structures being mounted thereto;
FIG. 24 is a close-up view of a portion of the adapter mounting module of FIG. 23;
FIG. 25 illustrates the adapter mounting module of FIG. 24 with the cable management structure removed therefrom;
FIG. 26 illustrates the adapter mounting module of FIGS. 23-25 from a rear perspective view;
FIG. 27 is a close-up view of the center portion of the adapter mounting module of FIG. 15;
FIG. 28 is a cross-sectional view taken along line 28-28 of FIG. 19; and
FIG. 29 illustrates the cross-section of FIG. 28 from a perspective view.

### Detailed Description

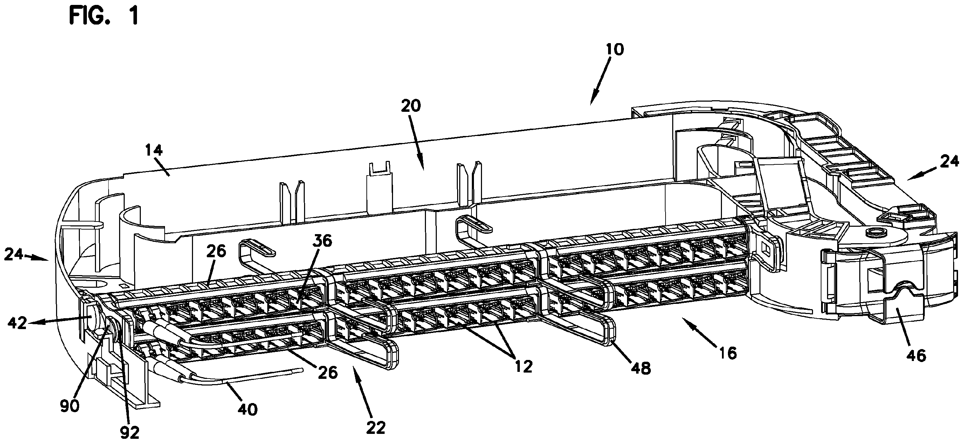

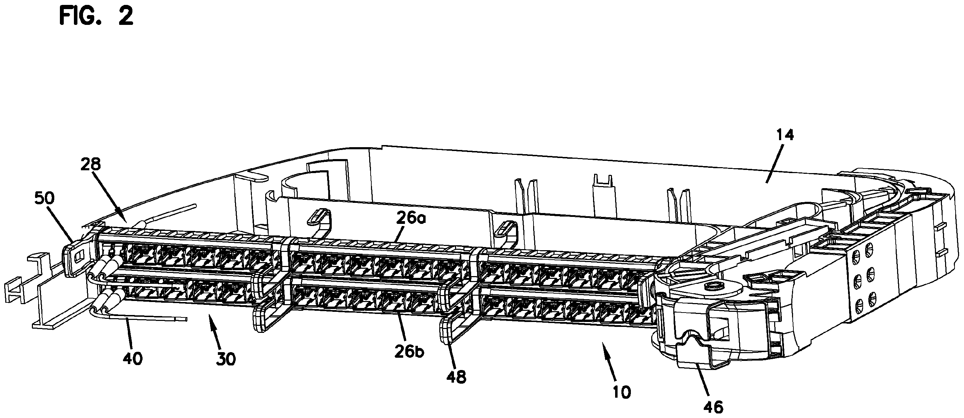

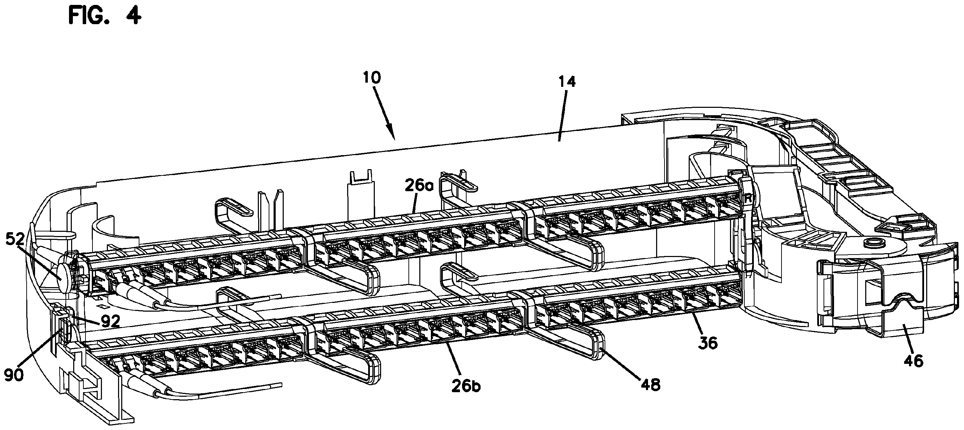

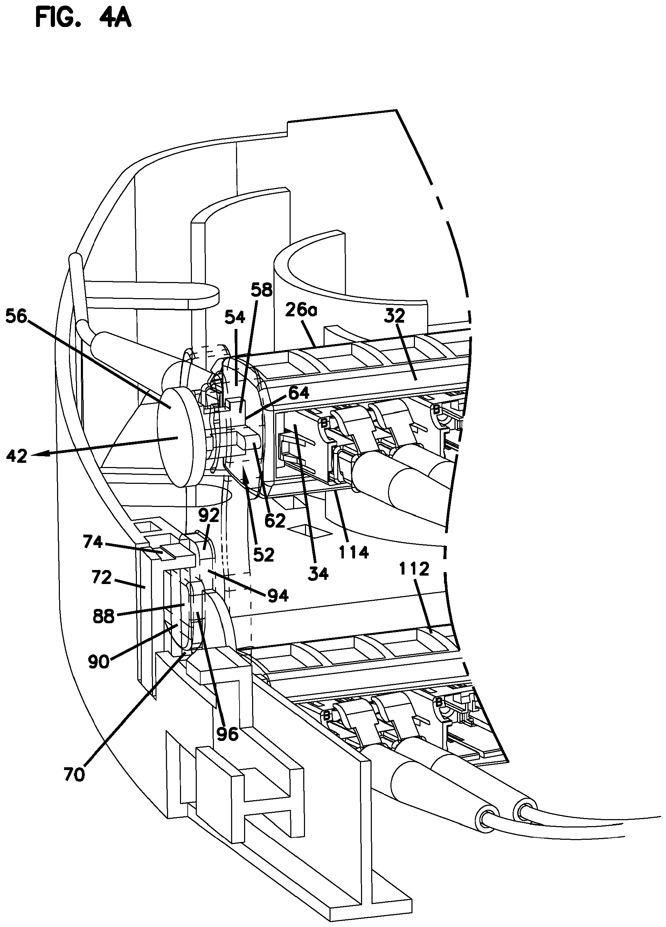

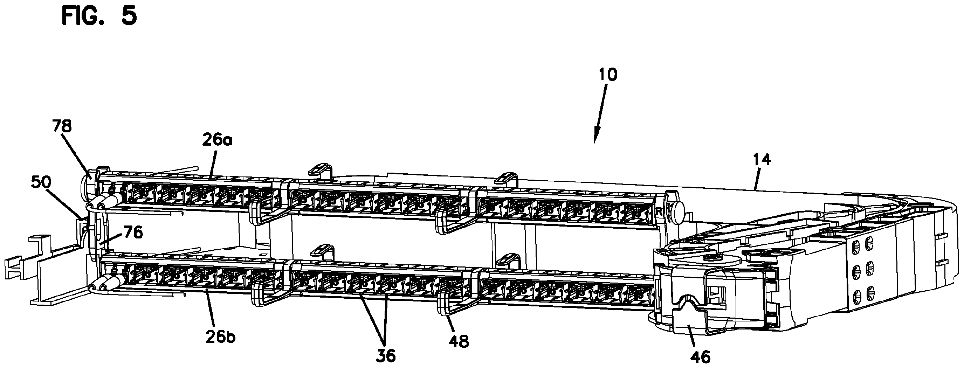

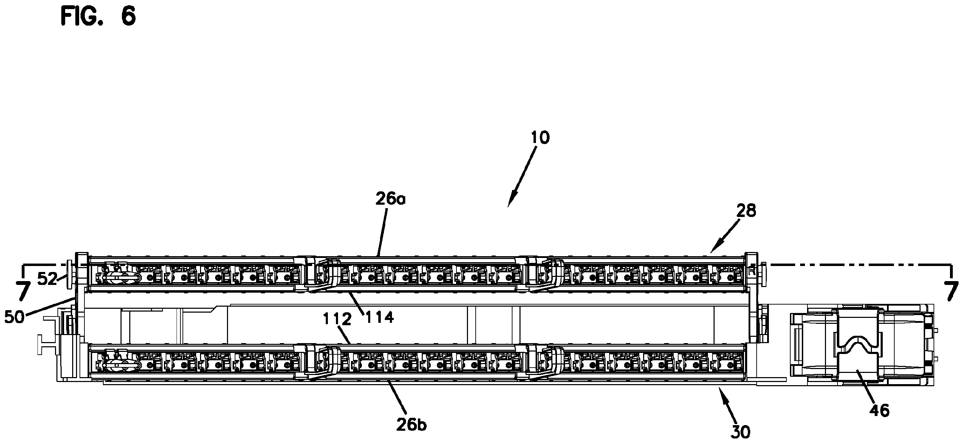

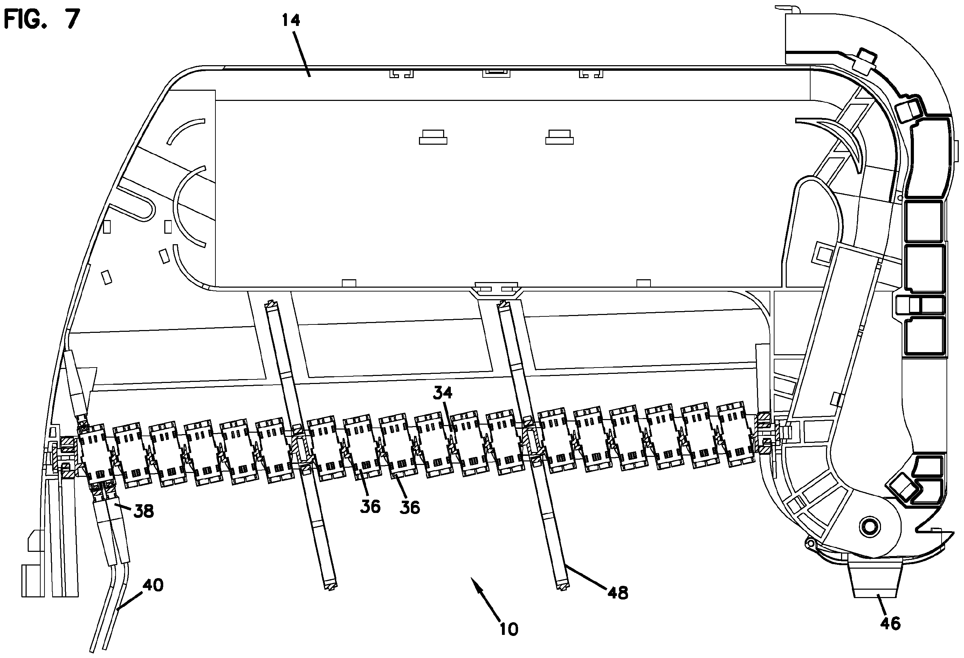

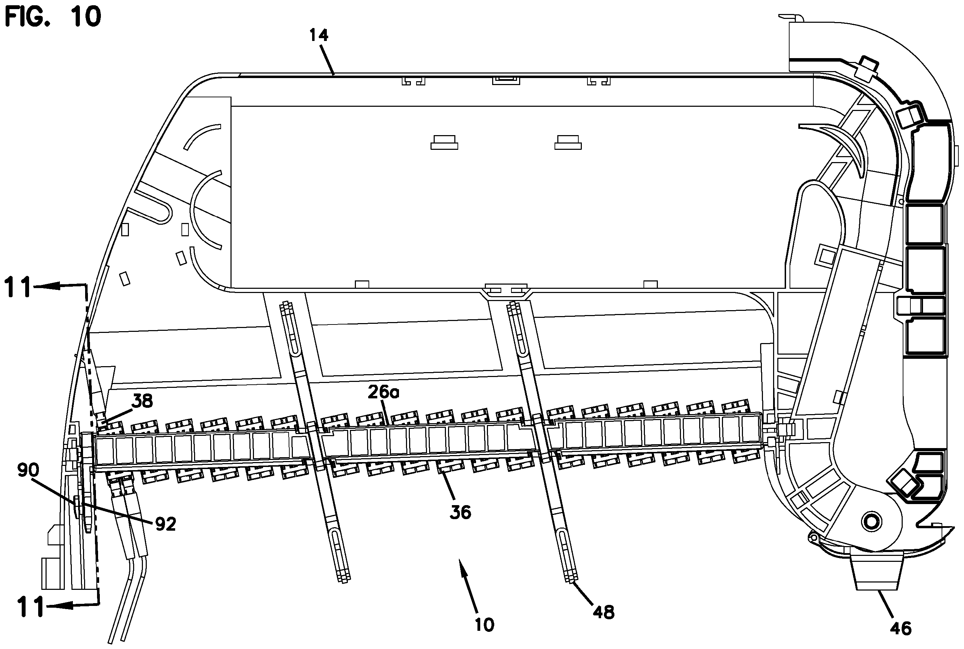

Referring now to FIGS. 1-12, a telecommunications panel assembly 10 is shown, which defines a plurality of cable termination locations 12. Panel assembly 10 includes a chassis 14 with an open front 16. Chassis 14 includes a main body 18 defining a top 20 (depicted as an open top), a bottom 22, and sides 24. A plurality of adapter mounting modules 26 are mounted to the chassis 14 and are accessible through the open front 16. In the depicted embodiment, the adapter mounting modules 26 are provided in an upper row 28 and a lower row 30. Even though the chassis 14 is shown with two rows 28, 30, other numbers of rows are possible.

Each adapter mounting module 26 includes a frame 32 with a module opening 34. Module opening 34 includes a plurality of adapters 36 mounted therein. Adapters 36 hold mating connectors 38 to allow for fiber optic signal transmission. As shown, the adapters 36 may be mounted at an angle within the module openings 34 for reducing the amount of cable bending as the cables 40 extend toward one of the sides 24 of the chassis 14.

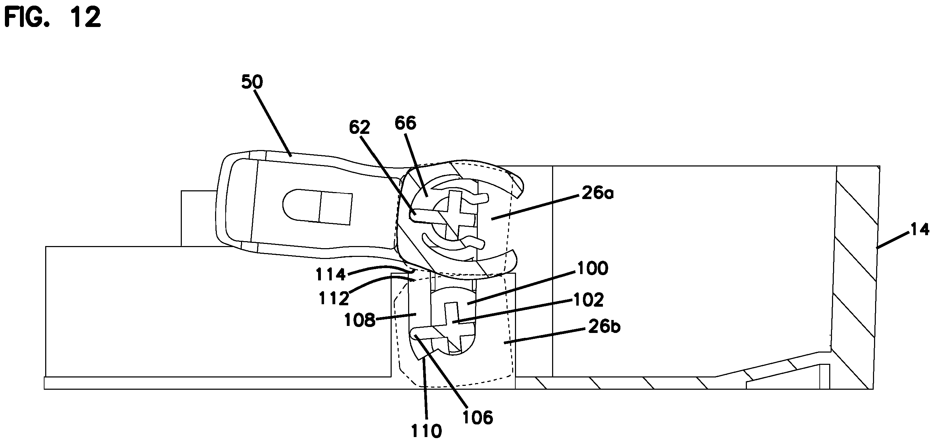

As will be discussed in further detail below, at least one of the adapter mounting modules 26 may be pivotable or rotatable about a pivot axis 42 with respect to an adapter mounting module 26 of a different row, wherein the pivot axis 42 extends horizontally and is defined by a pivot pin 52 of the module 26. In the example embodiment shown, both of the upper and lower modules 26a, 26b are pivotable as will be discussed in further detail below. Please see FIG. 12. The pivotability of the modules 26 improves access to the connectors 38 mounted to the adapters 36 of both the upper module 26a and the lower module 26b.

In one embodiment, panel assembly 10 includes a radius limiter 46 positioned adjacent to one of sides 24 of the chassis 14. The angled mounting of the adapters 36 limit bending as the cables 40 are directed toward the radius limiter 46. In the embodiment shown, the chassis 14 also includes a plurality of cable management fingers 48 extending both forward and rearward from the adapter mounting modules 26. The rear cable management fingers 48 manage cables 40 coming into the chassis 14 for connection to the rear ends of the adapters 36, and front cable management fingers 48 manage cables 40 extending from the front ends of the adapters 36 toward the larger radius limiter 46 at the side 24 of the chassis 14.

As will be discussed in further detail, in addition to the pivoting feature associated with the module 26a of the upper row 28, the upper module 26a may also be liftable with respect to the module 26b of the lower row 30 for improving access to the back side of the lower adapter module 26b. The liftability feature may be reversed with respect to the upper and lower rows. For example, it is contemplated by the present disclosure that the chassis 14 may be designed to have the bottom module 26b lowered with respect to the upper module 26a in order to improve access to the rear connectors 38 of the lower module 26b or the upper module 26a.

Now referring to FIGS. 1-4A, 9A, 9B, 11, and 12, in order to provide both pivotability and liftability for the adapter module 26a of the upper row 28, the telecommunications panel assembly 10 includes a pair of lift supports 50 that are used to support the upper adapter module 26a at a raised position. For sake of simplicity, only the left side of the chassis 14 including a left lift support 50 and the associated features on the left side of the chassis 14 will be discussed, with the understanding that the description is fully applicable to the right side of the chassis 14. Even though the features on the left side of the chassis 14 are fully applicable to the right side of the chassis 14, it should be noted that there may be certain differences between the left and right sides of the chassis and of the adapter modules for aspects such as keying, as will be discussed below.

As shown, the upper adapter mounting module 26a defines a pivot pin 52. The pivot pin 52 extends out from a side face 54 defined by the module 26a. The module 26a is configured to pivot along an axis 42 defined by the pivot pin 52 when the module 26a is in the lowered/neutral position. As will be discussed in further detail, in the depicted embodiment, the adapter module 26a is configured to pivot counterclockwise when looking at the module 26a from the left side such that the adapter ports of the top row 28 are raised upwardly at an angle.

The pivot pin 52 defines a flange portion 56 and a stem portion 58. The flange portion 56 is generally circular and is used to mount the upper module 26a to the chassis 14 when the upper module 26a is positioned at the lowered/neutral configuration.

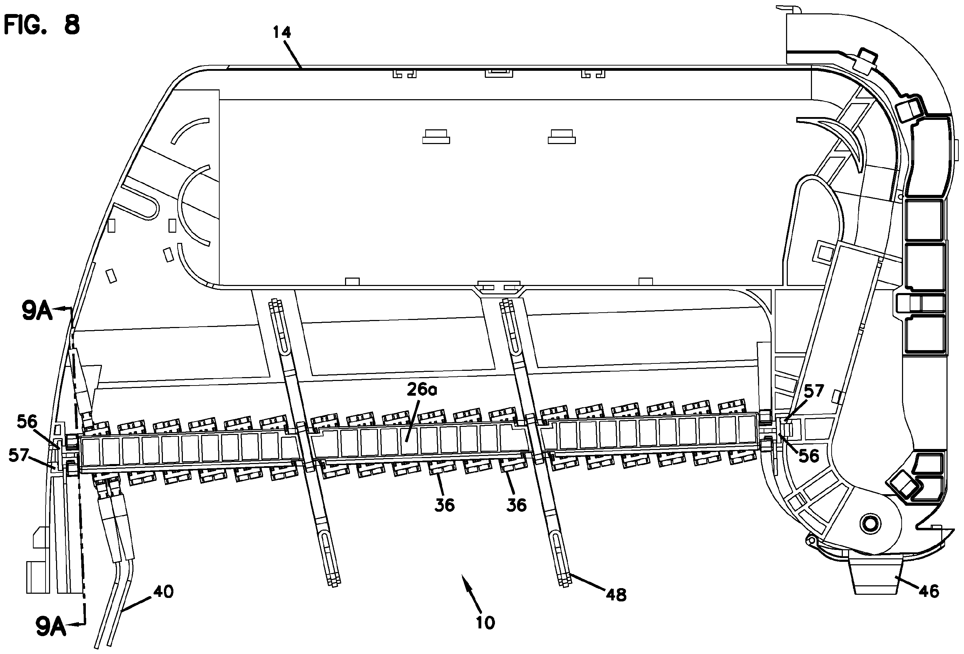

The flange portion 56 may be slidably inserted into a flange pocket 57 provided on the chassis 14 when mounting the upper module 26a to the chassis 14. It should be noted that the flange portion 56 at the left side of the module 26a (and the corresponding flange pocket 57 of the chassis 14) may include a different configuration than the flange portion 56 at the right side of the module 26a (and the corresponding flange pocket 57 of the chassis 14) for keying purposes. For example, as shown in the top view of the depicted embodiment in FIG. 8, the flange portion 56 at the left side of the module 26a (and the corresponding flange pocket 57 at the left side of the chassis 14) may define a larger cross-dimension than the flange portion 56 at the right side of the module 26a (and the corresponding flange pocket 57 at the right side of the chassis 14) such that the module 26a is only insertable in a single keyed orientation.

Referring back to FIGS. 1-4A, 9A, 9B, 11, and 12, the stem portion 58 of the pivot pin 52 defines a cross-shaped transverse cross-section 60. As will be discussed in further detail below, the cross-shape 60 of the stem 58 provides the ability to lock the upper module 26a at discrete angular positions as the module 26a is pivoted with respect to the lower module 26b when the upper module 26a is at the lowered position. The cross-shaped stem 58 interacts with the lift support 50 to provide the discrete angular locking positions as will be discussed in further detail below.

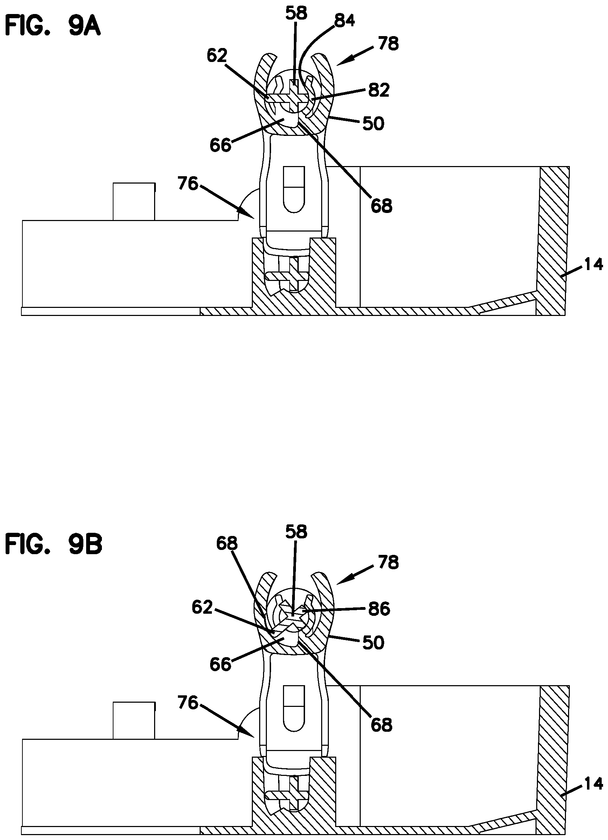

The pivot pin 52 also includes a stop tab 62 at the base 64 of the stem portion 58, adjacent the side face 54 defined by the module 26a. As will be discussed in further detail below, the stop tab 62 rides within a groove 66 defined on the lift support 50, wherein ends 68 of the groove 66 provide positive stops for the upper module 26a when the module 26a is removed from the chassis 14 and moved to a lifted position using the lift support 50. Please see FIGS. 9A, 9B, 11, and 12.

When mounting the upper adapter module 26a to the chassis 14 at the lowered/neutral position, the flange portion 56 of the pivot pin 52 is inserted into the flange pocket 57, and the stem portion 58 of the pivot pin 52 is inserted into a slot 70 provided at the side 24 of the chassis 14. Once the flange portion 56 is in the pocket 57 and the stem portion 58 is within the slot 70, a flexible latch 72 of the chassis 14 covers the circular flange portion 56 of the pivot pin 52 to retain the module 26a at the mounted position. As shown, the flexible latch 72 defines a finger notch 74 for elastically moving the latch 72 away from the flange portion 56 of the pivot pin 52 in removing the module 26a from the chassis 14.

Now referring to the lift support 50 and the functionality thereof, the lift support 50 defines a mounting end 76 and a pivot end 78. The pivot end 78 is configured to provide the pivotability for the upper module 26a with respect to the lower module 26b. The mounting end 76 is used in mounting the upper module 26a to the chassis 14 in the raised position.

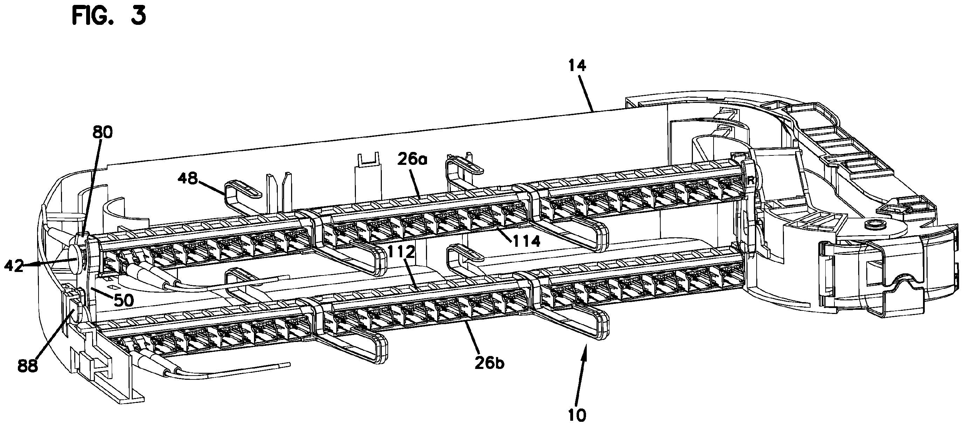

Referring to FIGS. 3, 4, 4A, 9A, 9B, 11, and 12, the pivot end 78 of the lift support 50 is generally C-shaped and defines an opening 80 for receiving the stem portion 58 of the pivot pin 52 of the upper module 26a. Within the opening 80 of the C-shaped pivot end 78 of the lift support 50 are a pair of opposing flexible locking arms 82. The flexible locking arms 82 are configured to interact with the cross-shaped stem portion 58 of the pivot pin 52. The flexible locking arms 82 not only allow pivotability of the upper module 26a along the pivot axis 42 but also lock the upper module 26a at discrete angular positions. As shown, the flexible locking arms 82 define protrusions 84 that abut the legs 86 forming the cross-shaped stem 58 of the pivot pin 52. In this manner, the interaction of the pivot end 78 of the lift support 50 (specifically, the flexible locking arms 82) with the pivot pin 52 of the module 26a provides discrete locking at 45-degree intervals.

When the upper module 26a needs to be moved to a raised position with respect to the lower module 26b for accessing the back side of the lower module 26b, the mounting end 76 of the lift support 50 is used. When the module 26a needs to be raised, the flexible latch 72 of the chassis 14 is moved away from the flange portion 56 of the pivot pin 52, and the stem portion 58 of the pivot pin 52 is taken out of the slot 70. The module 26a, along with the lift support 50, is lifted off the chassis 14. At this point, the lift support 50 is rotated clockwise with respect to the upper module 26a, with the cross-shaped stem 58 of the pivot pin 52 rotating between the flexible locking arms 82 of the lift support 50.

As noted previously, when the lift support 50 is rotated relative to the upper module 26a, the stop tab 62 of the pivot pin 52 of the module 26a interacts with the groove 66 defined on the inner side of the pivot end 78 of the lift support 50. The interaction between the ends 68 of the groove 66 and the stop tab 62 provides positive stops for the upper module 26a as the lift support 50 is pivoted with respect to the upper module 26a. In this manner, a user cannot rotate the lift support 50 past the desired position. The stop tab 62 provides positive stops at positions that are 90 degrees apart to allow a user to move the upper adapter mounting module 26a from a lowered position to a raised position.

Once the lift support 50 has been rotated 90 degrees clockwise with respect to the module 26a, the mounting end 76 is used in mounting the upper module 26a back to the chassis 14, but this time, in a raised position. Thus, instead of the module 26a being directly mounted to the chassis 14 (as in the lowered position), the lift support 50 now essentially acts as an intermediate structure between upper module 26a and the chassis 14 when mounting the upper module 26a at the raised position.

The mounting end 76 of the lift support 50 defines a mounting pin 88. The mounting pin 88 includes a flange portion 90 and a stem portion 92. When the upper adapter mounting module 26a needs to be lifted to the raised position, the stem portion 92 is inserted into the slot 70 of the chassis 14 that was previously used to receive the cross-shaped stem 58 of the module pivot pin 52 (when the module 26a was at the lowered position). The flange portion 90 is once again covered by the flexible latching arm 72 of the chassis 14 in retaining the stem portion 92 of the mounting pin 88 of the lift support 50 within the chassis slot 70.

The stem portion 92 of the mounting pin 88 of the lift support 50 defines flats 94 that abut parallel edges 96 defining the square shaped slot 70 of the chassis 14. The interaction of the flat surfaces 94, 96 keeps the lift support 50 at a vertical position and thus the upper module 26a at a lifted position.

With the upper module 26a at the lifted position, access to the back side of the lower module 26b is facilitated.

If the upper module 26a needs to be lowered again, the steps are reversed. The mounting pin 88 of the lift support 50 is lifted out of the chassis slot 70 after moving the flexible latch 72 out of the way. The lift support 50 is then rotated counterclockwise with respect to the module 26a (limited by the positive stops provided between the groove 66 ends and the stop tab 62) and the stem 58 of the pivot pin 52 inserted once again into the slot 70 to secure the upper module 26a in the lowered position.

As discussed previously, once in the lowered position, the upper module 26a can be pivoted with respect to the lower module 26b along the axis 42 defined by the pivot pin 52 of the upper module 26a. The cross-shaped stem portion 58 of the pivot pin 52 interacts with the flexible locking arms 82 provided at the pivot end 78 of the lift support 50 to provide the discrete 45-degree locking positions. See FIGS. 9A and 9B.

As noted previously, similar structures are provided for the right side of the chassis 14 and the module 26a for the pivotability and the liftability of the upper adapter mounting module 26a.

It should be noted that in certain embodiments, for example, in the depicted embodiment, the lower adapter mounting module 26b is also pivotable with respect to the chassis 14 and the upper module 26a. According to one embodiment, the lower module 26b is pivotable in a clockwise direction, away from the upper module 26a, when viewed from the left side of the chassis 14.

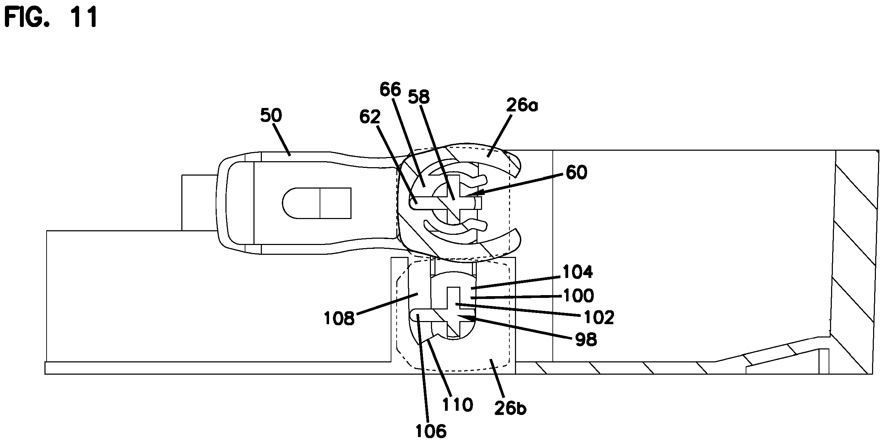

As shown in the depicted example, the lower module 26b may include similar features to that of the upper module 26b such as a pivot pin 98 and can be mounted to the chassis 14 so as to be pivotable along a pivot axis defined by the pivot pin 98. Similar to that of the upper module 26a, the pivot pin 98 may include a flange portion 100 and a stem portion 102. The pivot pin 98 may be used to mount the lower module 26b to a mounting slot 104 provided on the chassis 14. An example of the slot 104 of the chassis 14 is shown in FIGS. 11 and 12. Similar to that of the upper module 26a, the pivot pin 98 of the lower module 26b may also include a stop tab 106 at the base of the stem portion 102, adjacent the side face defined by the lower module 26b. The stop tab 106, similar to that of the upper module 26a, is configured to ride within a groove 108 defined as part of the mounting slot 104 of the chassis 14 and interact with an end 110 of the groove 108 to provide a positive stop for the lower module 26b. The positive stop is provided for the lower module 26b when the lower module 26b is at a downwardly pivoted position as illustrated in FIG. 12.

It should be noted that the top and bottom surfaces 112, 114 of the upper and lower adapter mounting modules 26a, 26b may be designed with a certain amount of curvature, and the upper and lower modules 26a, 26b may be positioned such that frictional interference between the two modules 26a, 26b may provide simultaneous pivoting motion for the top row and the bottom row, albeit in opposite rotational directions.

As shown in FIGS. 11 and 12, when the upper module 26a is pivoted upwardly, the frictional interference between the bottom surface 114 of the upper module 26a and the top surface 112 of the lower module 26b may cause opposing rotational motion for the two rows. Thus, pivoting up the upper module 26a may simultaneously pivot down the lower module 26b to enlarge the size of the access area and to improve the access to the connectors 38 of both.

Providing the upper module 26a and the lower module 26b with identical or similar features may lead to manufacturing efficiencies and cost savings.

Although the depicted adapters 36 used in the panel assembly 10 of the present disclosure are of LC format, other types of fiber optic adapters 36, such as SC or MPO may be used.

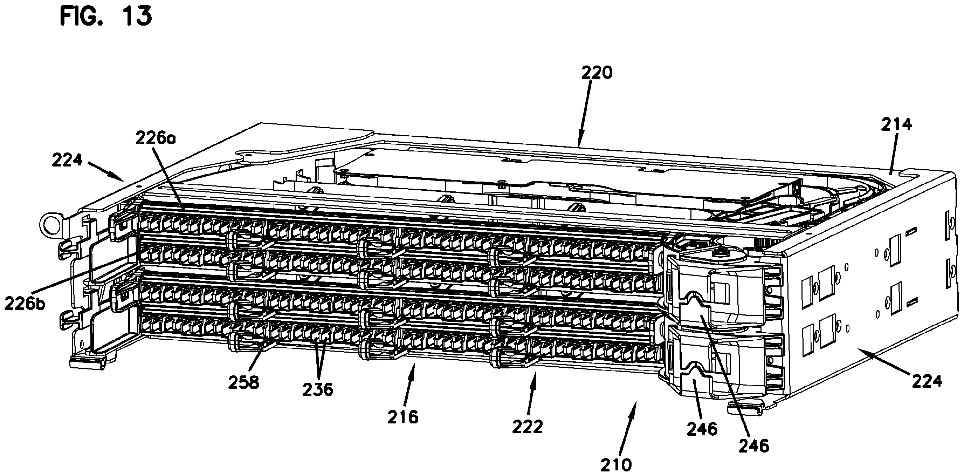

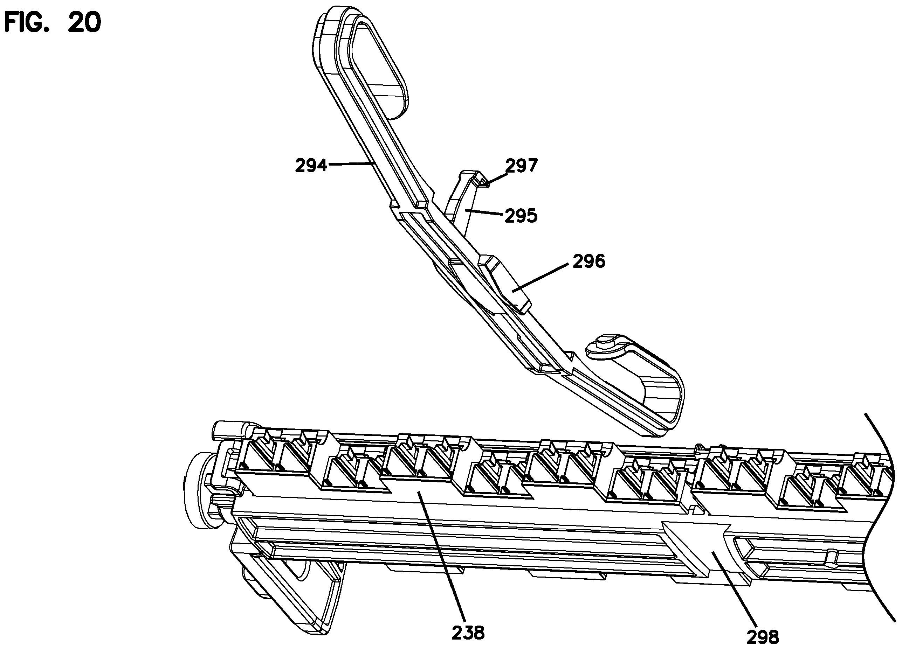

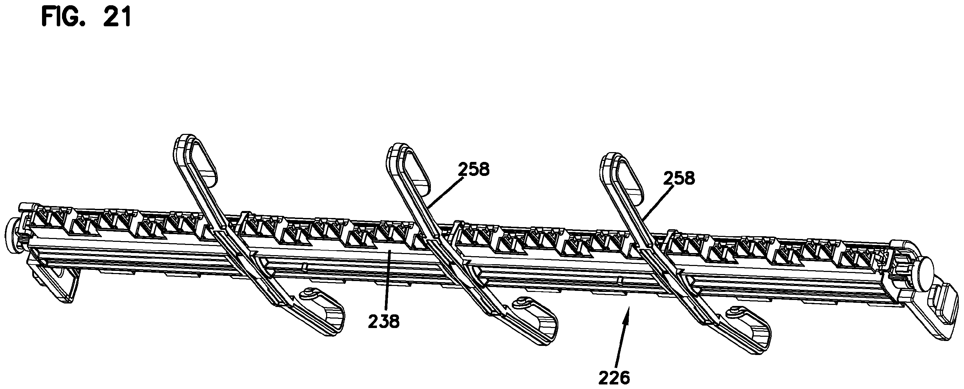

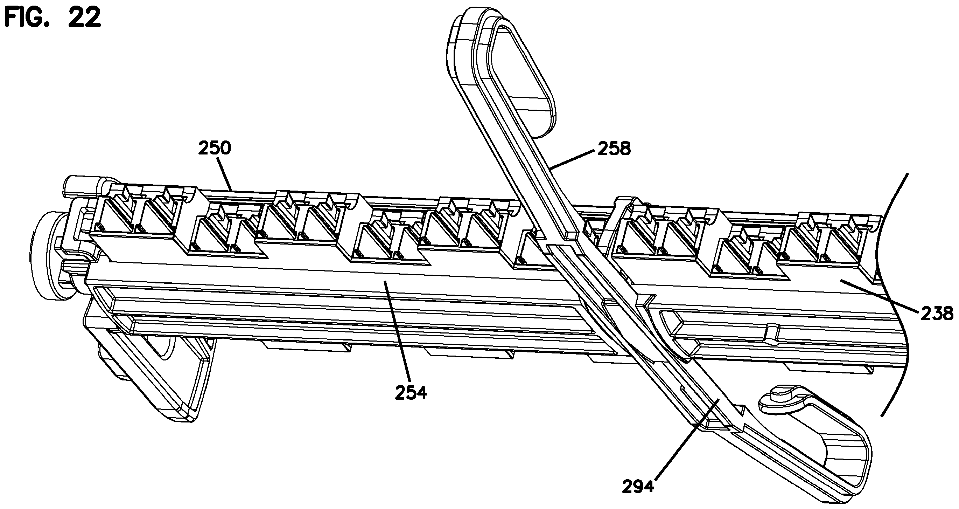

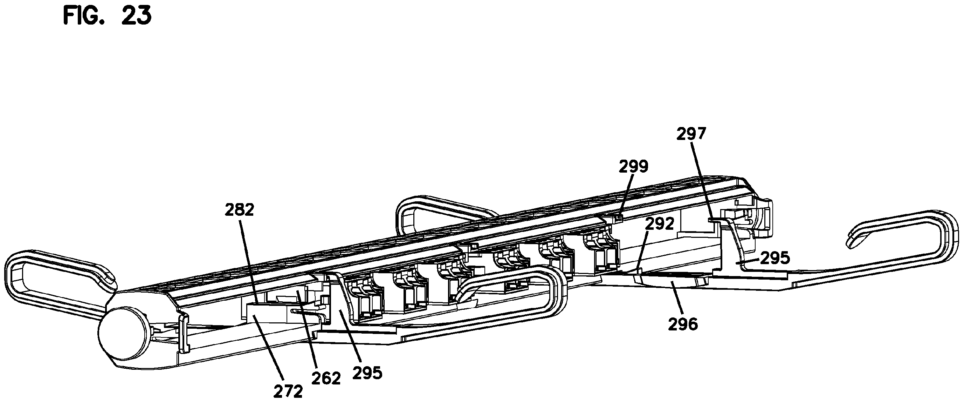

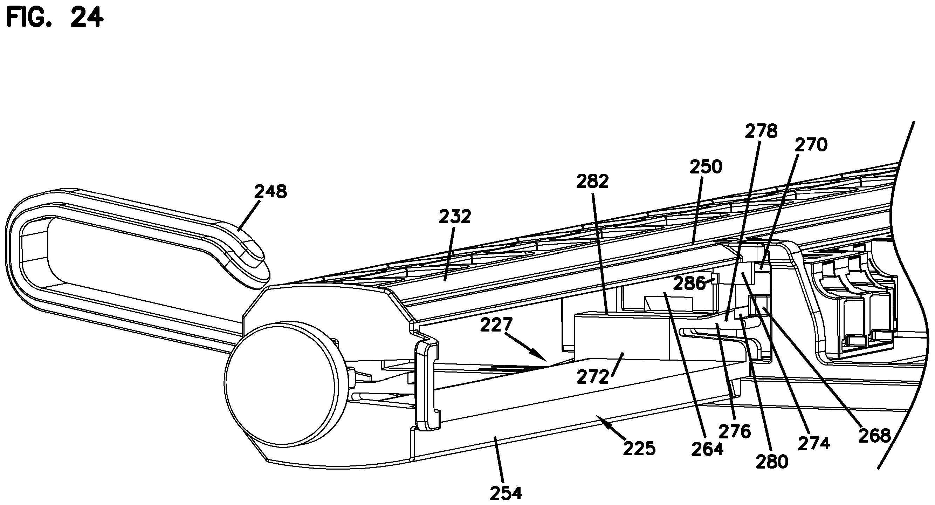

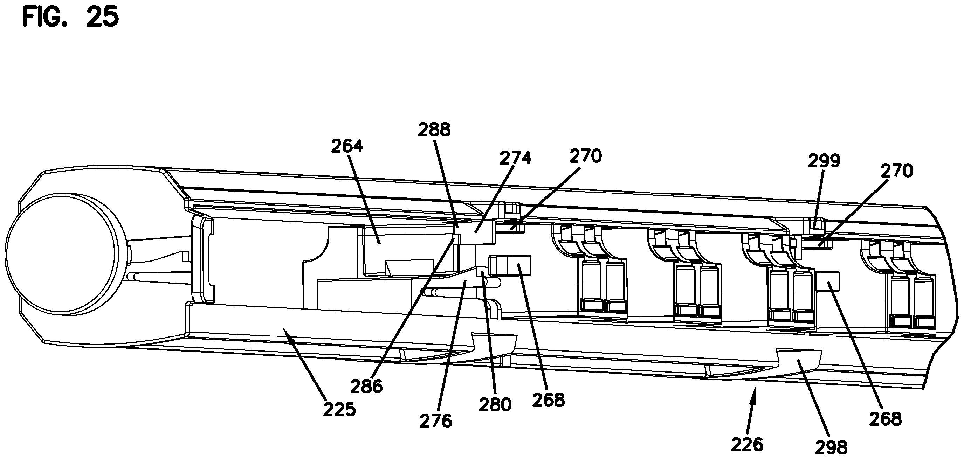

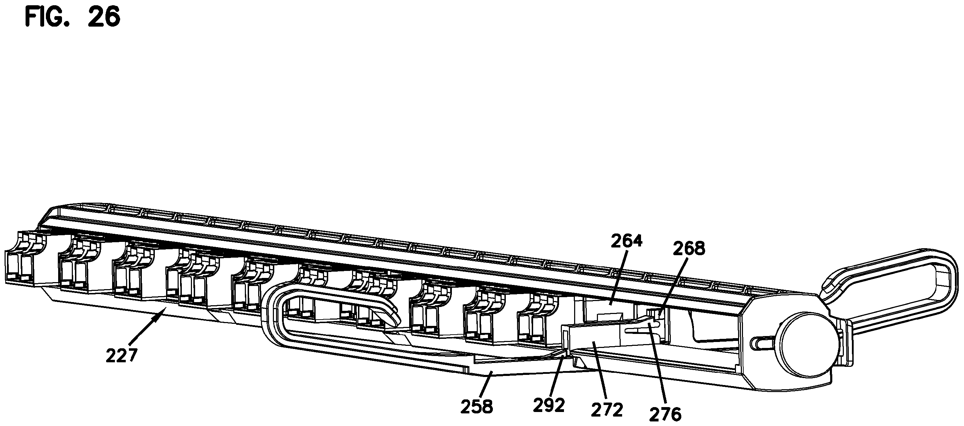

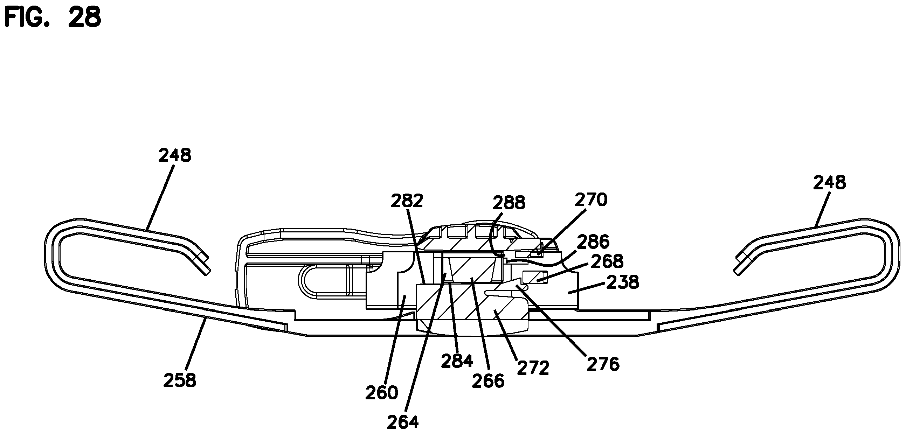

Referring now to FIGS. 13-29, another embodiment of a telecommunications panel assembly 210 having features similar to those of the panel assembly 10 of FIGS. 1-12 is shown. Panel assembly 210 includes a chassis 214 with an open front 216 for providing access to connections locations defined by the chassis 214. As will be described in further detail below, the connection locations of the chassis 214 are defined by fiber optic adapters 236 in the depicted embodiment.

Chassis 214 defines a top 220, a bottom 222, and sides 224. As shown in FIG. 13, a plurality of adapter mounting modules 226 are mounted to the chassis 214 and are accessible through the open front 216. In the depicted embodiment, the chassis 214 includes four adapter mounting modules 226 provided in a stacked arrangement going from the bottom 222 toward the top 220. Even though the chassis 214 is shown with four rows of modules 226, other numbers of rows are possible.

It should be noted that, other than discussed herein specifically, each of the adapter mounting modules 226 includes all of the features discussed above with respect to modules 26 of FIGS. 1-12. For example, each of the adapter mounting modules 226 may be pivotable or rotatable about a pivot axis 242 with respect to an adapter mounting module 226 of a different row, wherein the pivot axis 242 extends horizontally and is defined by a pivot pin 252 of the module 226. In the example embodiment shown, both of the upper and lower modules 226a, 226b of a given pair are pivotable with respect to each other. As discussed previously, the pivotability of the modules 226 improves access to the connectors mounted to the adapters 236 of the modules 226. In addition to the pivoting feature associated with the module 226a of an upper row, the upper module 226a may also be liftable with respect to the module 226b of a lower row for improving access to the back side of the lower adapter module 226b as discussed above in detail with respect to the adapter mounting modules 26 of FIGS. 1-12. The liftability feature may be reversed with respect to the upper and lower rows. For example, it is contemplated by the present disclosure that the chassis 214 may be designed to have the bottom module 226b lowered with respect to the upper module 226a in order to improve access to the rear connectors of the lower module 226b or the upper module 226a.

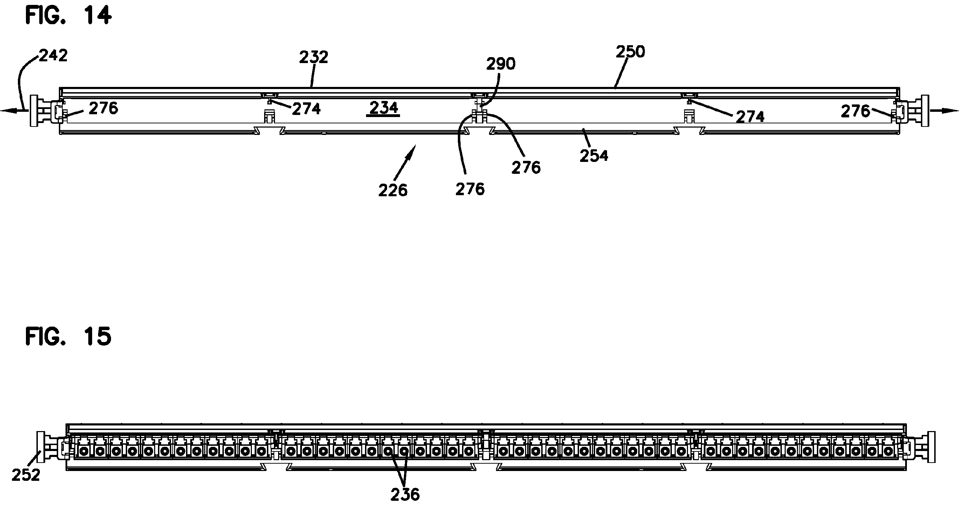

Now referring to the adapter mounting modules 226 in isolation as seen in FIGS. 14-28, each adapter mounting module 226 includes a frame 232 defined by an upper wall 250 and lower wall 254 and a module opening 234 that is configured to receive the fiber optic adapters 236. According to the depicted embodiment, the fiber optic adapters 236 may be provided as adapter blocks 238 that are formed from a plurality of adapters 236 molded as an integral unit.

According to one aspect of the disclosure, as will be described in further detail below, the adapter mounting modules 226 define structure for receiving the fiber optic adapter blocks 238 generally horizontally, parallel to a front-to-back direction. According to certain embodiments, the mounting direction of the fiber optic adapter blocks are generally parallel to the longitudinal adapter axes 256 of the individual adapters 236.

Once the adapters 236 are mounted, the adapters 236 hold mating connectors to allow for fiber optic signal transmission. In the depicted embodiment, the adapters 236 or the adapter blocks 238 are mounted parallel to the sides of the mounting modules 226 or the chassis 214, with each of the individual adapters 236 defining parallel adapter axes 256. It is also contemplated that the adapters 236 may be mounted at an angle to the sides of the adapter mounting modules 226. In this manner, for these embodiments, cables extending therefrom can be directed toward radius limiters 246 at one of the sides of the chassis 214, as shown with respect to modules 26 of FIGS. 1-12.

Still referring to FIGS. 13-28, the panel assembly 210 also includes cable management structures 258 similar to those provided on the panel assembly 10 of FIGS. 1-12. The cable management structures 258 are configured to manage and direct cables toward the larger radius limiters 246 at the side 224 of the chassis 214. As shown, each row of adapter mounting modules 226 includes a plurality of cable management structures 258 mounted thereto, each defining cable management fingers 248 that extend both forward and rearward from the adapter mounting modules 226. The rear cable management fingers 248 manage cables coming into the chassis 214 for connection to the rear ends of the adapters 236, and front cable management fingers 248 manage cables extending from the front ends of the adapters 236 toward the larger radius limiters 246 at the side 224 of the chassis 214. As will be discussed in further detail, the cable management structures 258 are slidably mounted to the modules generally horizontally along a front-to-back direction, similar to the mounting of the adapter blocks 238.

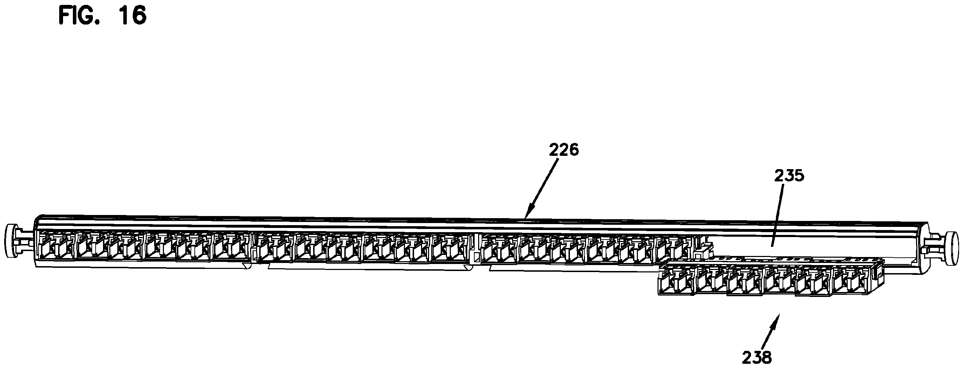

Regarding the slidable mountability of the adapter blocks 238 to the modules 226, further details are discussed with reference to FIGS. 16, 17, and 25-29. The adapter blocks 238 define mounting structures 239 at the right and left sides 260 of the blocks 238. In the depicted embodiment, each adapter block 238 defines, on each side 260, a dovetail structure 262 defined by a large flange portion 264 and a narrow stem portion 266, a catch tab 268, and a key tab 270. The adapter mounting modules 226 of the present disclosure are configured to use these mounting structures 239 at the sides 260 of the blocks 238 and receive the blocks 238 generally horizontally in a front-to-back direction, whereas these mounting structures 239 of the adapter blocks 238 are conventionally used in mounting the adapter blocks 238 to other types of telecommunications equipment or fixtures along a vertical direction. For example, the dovetail structure 262 is used to slidably mount such adapter blocks 238 to other types of equipment or fixtures along a vertical direction, perpendicular to the adapter axes 256. And, for example, the catch tab 268 of the adapter blocks 238 is normally used to snap-fit the adapter blocks 238 to other equipment such as adapter modules or cassettes that use the blocks 238 at the front portions thereof. Further details relating the structure and mounting of such adapter blocks 238 to other types of fiber optic equipment is discussed in U.S. Patent Nos. 9,075,023; 9,057,859; 9,069,150; and 9,195,021.

However, as noted above, the adapter mounting modules 226 of FIGS. 14-29 include structures that can receive the same adapter blocks 238 along a horizontal front-to-back direction without any modification to such adapter blocks 238. As will be discussed in further detail, the dovetail structure 262 of the adapter block 238 that is normally used as the locking feature can now be used as both a keying and a stop feature when horizontally mounting the adapter blocks 238 to the modules 226 of the present disclosure. The catch tab 268 can now be used to provide the locking of the adapter block 238 to the modules 226. And, the key tab 270 can provide an additional keying function to assure that the blocks 238 are not mounted upside down to the modules 226.

Now referring specifically to FIGS. 16, 17, and 25-29, each adapter mounting module 226 defines a plurality of bulkheads 272 at the lower wall 254 thereof and a corresponding divider wall 274 extending downwardly from the upper wall 250 thereof that divide the main opening 234 of the module into separate individual openings 235 for receiving the adapter blocks 238. As shown, each bulkhead 272 defines a flexible cantilever arm 276 that is configured to flex in receiving the adapter blocks 238 from the rear end 227 toward the front end 225 of the module 226 in the depicted embodiment. Each cantilever arm 276 defines a ramped tab 278 that rides under the catch tab 268 of the adapter block 238 as the adapter block 238 is slidably inserted into the module 226 from the rear 227 to the front 225. Once the ramped tab 278 clears the catch tab 268, the cantilever arm 276 flexes upwardly to snap-lock the catch tab 268 into place. A vertical catch surface 280 defined by the ramped tab 278 limits rearward movement of the catch tab 268, and thus of the entire block 238, after the catch tab 268 is locked into place.

As the adapter blocks 238 are slid forwardly during insertion, the cooperation of the dovetail structure 262 and an upper surface 282 of the bulkhead 272 provides a keying function such that the adapter blocks 238 are not inserted in an upside down orientation. The lower surface 284 of the dovetail flange 264 rides along the upper surface 282 of the bulkhead 272 when the adapter block 238 is being inserted in the correct orientation.

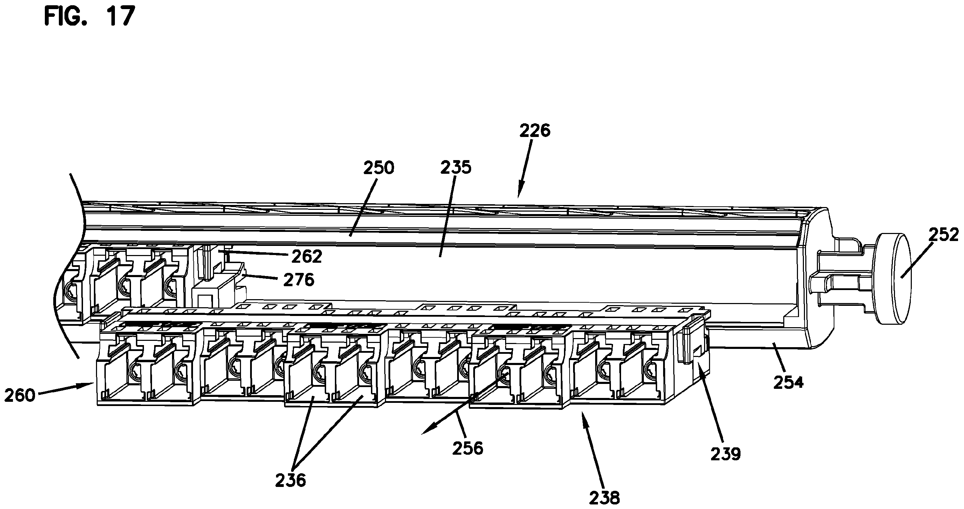

As shown in FIGS. 17, 25, 28, and 29, the divider wall 274 includes a stop tab 286 extending sideways from each side of the divider wall 274. A space 288 is provided between the stop tab 286 and the upper wall 250 of the adapter mounting module 226. This space 288 accommodates the key tab 270 of the adapter block 238 during insertion of the adapter block 238. In this manner, the cooperation of the key tab 270 and the space 288 provided above the stop tab 286 provide an additional keying feature in correctly orienting the adapter block 238 during insertion.

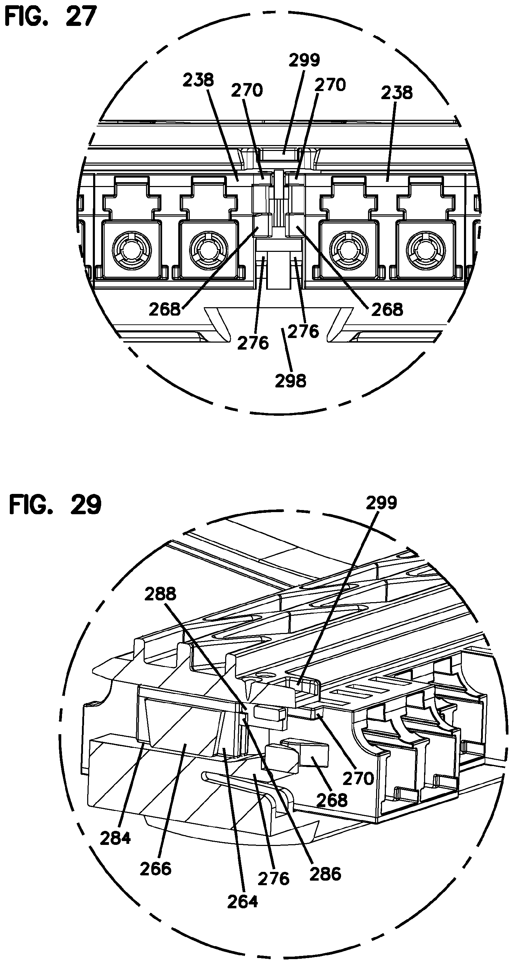

As shown in FIGS. 27-29, the stop tab 286 is configured to abut and provide a positive stop for the dovetail flange 264 during insertion of the adapter block 238. In this manner, the stop tab 286 of the divider 274 limits further forward movement of the adapter block 238 during insertion.

It should be noted that all of the bulkheads 272 of each adapter mounting module 226 define a single cantilever arm 276 except for the center bulkhead 272. The center bulkhead 272 is separated into two cantilever arms 276 that are spaced apart to accommodate a rib structure 290 extending from the upper wall 250 of the mounting module 226. The rib structure 290 is configured to improve the rigidity of the module 226.

As shown, the center divider walls 274 and the cantilever arms 276 of the bulkheads 272 (except the very center bulkhead 272) are shared by adjacent adapter blocks 238 in latching the blocks 238 to the adapter mounting modules 226.

In removing one of the adapter blocks 238, the cantilever arm 276 of a bulkhead 272 has to be flexed downward until it clears the catch tab 268 of the adapter block 238. Thereafter, the adapter block 238 can be slid rearwardly for removal.

It should be noted that the adapter blocks 238 of the present application are depicted as defining a plurality of adapters 236 provided in a stacked arrangement extending from the right to the left side 260 of the adapter block 238, wherein every other adapter 236 of the block 238 of adapters is staggered in a transverse direction, such as in a front-to-back direction with respect to an adjacent adapter 236. The fiber optic adapters 236 may be provided in such a staggered alternating arrangement to facilitate improved connector access. Small form factor connectors particularly benefit from such a construction. Examples include LC and LX.5 type fiber optic connectors. It should be noted that other adapter types or formats such as SC can also be utilized. Further details relating to such staggered adapter blocks 238 are provided in U.S. Patent Nos. 9,075,023; 9,057,859; 9,069,150; and 9,195,021, the entire disclosures of which have been incorporated herein by reference.

Even though the mounting features of the adapter mounting modules 226 and the adapter blocks 238 have been described with respect to staggered blocks, the features are fully applicable to standard, non-staggered blocks.

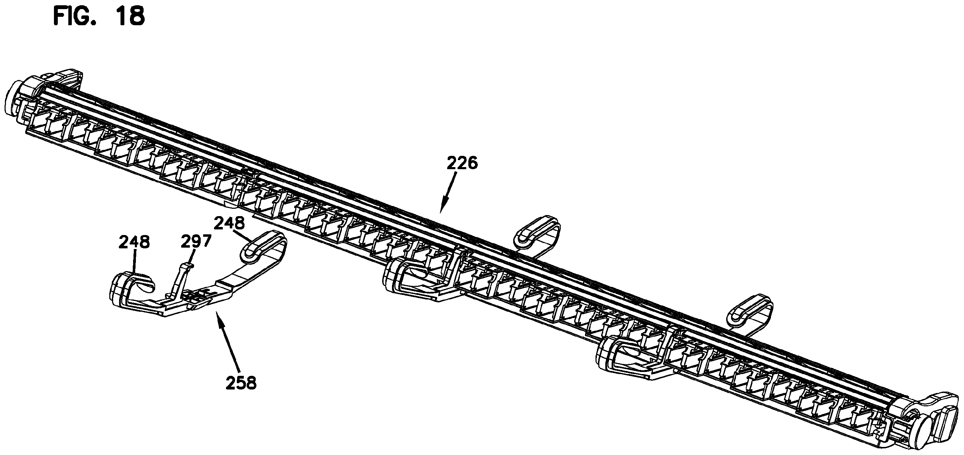

Referring now to FIGS. 18-24, the mounting of the cable management structures 258 are discussed in further detail. As noted above, the cable management structures 258 are also mounted via a horizontal sliding movement similar to the adapter blocks 238. However, unlike the adapter blocks 238, the cable management structures 258, in the depicted embodiment, are mounted front to back.

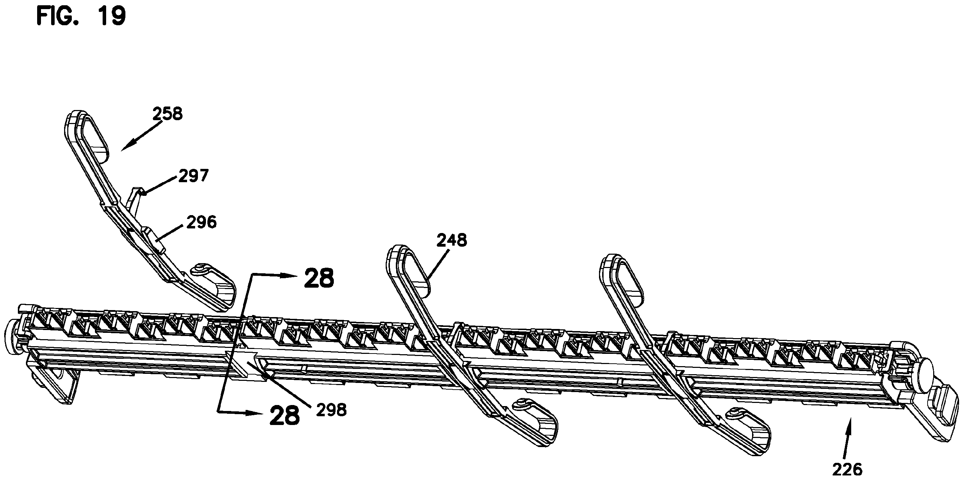

Each cable management structure 258 defines a flex tab 292 that has been integrally molded to an elongated body 294 of the cable management structure 258. Each cable management structure 258 also defines a tapered locking portion 296 along its body 294 adjacent the flex tab 292. As noted, the cable management structures 258 are configured to be slidably mounted to the modules 226 in a front-to-rear direction. The tapered locking portion 296 cooperates with a corresponding tapered slot 298 defined at the lower wall 254 of the mounting module 226 in slidably receiving the cable management structure 258. The tapered locking portion 296 of the cable management structure 258 is slidably moved within the tapered slot 298 until the flex tab 292 clears the rear end 227 of the module 226 and flexes upwardly. Once the flex tab 292 snaps back into place, the cable management structure 258 is prevented from being pulled forwardly. And, the tapered cooperation of the locking portion 296 and the slot 298 limit further rearward movement of the cable management structure 258 with respect to the adapter mounting module 226. As shown in FIGS. 19-22, the tapered locking portion 296 of the cable management structure 258 increases in cross dimension as it extends from the rear to the front of the body 294. The corresponding tapered slot 298 decreases in cross dimension as it extends from the front end 225 of the adapter mounting module 226 toward the rear end 227. Thus, the cooperation of the locking portion 296 and the slot 298 provides a friction lock and limits further movement toward the rear end 227 of the module 226.

As shown, each cable management structure also defines a stiffener portion 295. The stiffener 295 defines a rearwardly extending projection 297 that is configured to fit into a corresponding notch 299 in the upper wall 250 of the module 226. As shown, the notches 299 are generally aligned with the bulkheads 272 provided on the modules 226. The cooperation of the projection 297 and the notch 299 provides further rigidity to the upper and lower walls 250, 254 of the mounting module frame 232 and limits separation of the upper and lower walls 250, 254 of the frame 232 in keeping the mounted adapter blocks 238 latched in. The notches 299 and the rearwardly extending projections 297 also provide a keying function in inserting the cable management structures 258 from the correct side of the modules 226.

Removal of each cable management structure 258 is accomplished by flexing the flex tab 292 downwardly until it clears the rear face of the lower wall 254 of the module 226 and sliding the tapered locking portion 296 of the cable management structure 258 in the forward direction until it leaves the tapered slot 298 of the module 226.

As shown, each module 226 is configured to receive three of the cable management structures 258 in equally spaced apart positions. The cable management fingers 248 of the cable management structures 258 extend both forward and rearward from the adapter mounting modules 226. As noted above, the rear cable management fingers 248 are configured to manage cables coming into the chassis 214 for connection to the rear ends of the adapters 236, and front cable management fingers 248 are configured to manage cables extending from the front ends of the adapters 236 toward the larger radius limiters 246 at the side 224 of the chassis 214.

Although in the foregoing description, terms such as "top," "bottom," "front," "back," "right," "left," "upper," and "lower" were used for ease of description and illustration, no restriction is intended by such use of the terms. The telecommunications devices described herein can be used in any orientation, depending upon the desired application.

Having described the preferred aspects and embodiments of the present disclosure, modifications and equivalents of the disclosed concepts may readily occur to one skilled in the art without departing from the scope of the invention as defined by the claims.

### Parts List

- 10: telecommunications panel assembly
- 12: cable termination locations
- 14: chassis
- 16: open front
- 18: main body
- 20: top
- 22: bottom
- 24: side
- 26: adapter mounting module
- 26a: upper adapter mounting module
- 26b: lower adapter mounting module
- 28: upper row
- 30: lower row
- 32: frame
- 34: module opening
- 36: adapter
- 38: connector
- 40: cable
- 42: pivot axis
- 46: radius limiter
- 48: cable management finger
- 50: lift support
- 52: pivot pin
- 54: module side face
- 56: flange portion of pivot pin
- 57: flange pocket
- 58: stem portion of pivot pin
- 60: transverse cross-section
- 62: stop tab
- 64: base of stem portion
- 66: groove
- 68: ends of groove
- 70: chassis slot
- 72: flexible latch
- 74: finger notch
- 76: mounting end of lift support
- 78: pivot end of lift support
- 80: opening
- 82: flexible locking arm
- 84: protrusion
- 86: leg
- 88: mounting pin
- 90: flange portion of mounting pin
- 92: stem portion of mounting pin
- 94: flats
- 96: parallel edges
- 98: pivot pin of lower adapter mounting module
- 100: flange portion of pivot pin
- 102: stem portion of pivot pin
- 104: slot
- 106: stop tab
- 108: groove
- 110: end of groove
- 112: top surface
- 114: bottom surface
- 210: telecommunications panel assembly
- 214: chassis
- 216: open front
- 220: top
- 222: bottom
- 224: side
- 225: front end
- 226: adapter mounting module
- 226a: upper adapter mounting module
- 226b: lower adapter mounting module
- 227: rear end
- 232: frame
- 234: module opening
- 235: opening
- 236: fiber optic adapters
- 238: adapter block
- 239: mounting structure
- 242: pivot axis
- 246: radius limiter
- 248: cable management finger
- 250: upper wall
- 252: pivot pin
- 254: lower wall
- 256: adapter axis
- 258: cable management structure
- 260: right and left side of adapter block
- 262: dovetail structure
- 264: flange portion
- 266: stem portion
- 268: catch tab
- 270: key tab
- 272: bulkhead
- 274: divider wall
- 276: cantilever arm
- 278: ramped tab
- 280: catch surface
- 282: upper surface of bulkhead
- 284: lower surface of dovetail flange
- 286: stop tab
- 288: space
- 290: rib structure
- 292: flex tab
- 294: body
- 295: stiffener
- 296: tapered lock portion
- 297: projection
- 298: tapered slot
- 299: notch

## Claims

1. A telecommunications panel assembly (210) comprising:
a chassis (214) including a front (216), the chassis (214) further defining a top (220), a bottom (222), and two sides (224);
a plurality of adapter mounting modules (226) mounted to the chassis (214) at the front (216), each adapter mounting module (226) defining a first wall (254) separated from a second opposing parallel wall (250) by an opening (234), each adapter mounting module (226) defining a plurality of adapter mounting locations, each configured to slidably receive at least one adapter block (238) defining a plurality of fiber optic adapters (236) in an insertion direction;
wherein each adapter mounting location defines a flexible cantilever arm (276) at the first wall (254) for latching with the at least one adapter block (238) and a corresponding third wall (274) extending perpendicularly from the second wall (250) toward the flexible cantilever arm (276), the third wall (274) defining a keying slot (288) for orienting the at least one adapter block (238) in the correct orientation for insertion into the adapter mounting module (226), the third wall (274) also defining a positive stop surface (286) for limiting further movement of the at least one adapter block (238) in the insertion direction,
wherein at least one of the adapter mounting locations is configured such that two adjacent adapter blocks (238) can share the same flexible cantilever arm (276) at the first wall (254) and the corresponding third wall (274) extending perpendicularly from the second wall (250) toward the flexible cantilever arm (276) in keying and latching the adapter blocks (238) to the adapter mounting module (226).

2. A telecommunications panel assembly (210) according to claim 1, wherein the keying slot (288) is defined between the second wall (250) of the adapter mounting module (226) and a transverse tab that defines the positive stop surface (286) of the third wall.

3. A telecommunications panel assembly (210) according to claim 1, wherein the insertion direction is generally parallel to adapter axes (256) of the plurality of fiber optic adapters (236) of the at least one adapter block (238).

4. A telecommunications panel assembly (210) according to claim 1, wherein at least one of the adapter mounting modules (226) is pivotally mounted about a horizontal rotation axis (242) extending parallel to the top (220) and bottom (222), and transversely to the sides (224), wherein the at least one pivotable adapter mounting module (226) is rotatable in either an upward or a downward direction.

5. A telecommunications panel assembly (210) according to claim 1, wherein the plurality of adapter mounting modules (226) defines an upper module (226a) and a lower module (226b), wherein at least one of the upper module (226a) and the lower module (226b) is pivotable away from the other of the upper module (226a) and the lower module (226b) and is also repositionable at a position spaced linearly apart from the other of the upper module (226a) and the lower module (226b).

6. A telecommunications panel assembly (210) according to claim 5, wherein the upper module (226a) is pivotable away from the lower module (226b) and is also repositionable at a raised position from the lower module (226b) for facilitating access to adapters (236) at a rear side of the lower module (226b).

7. A telecommunications panel assembly (210) according to claim 1, further comprising a cable management structure (258) mounted at each adapter mounting location, each cable management structure (258) defining cable management fingers (248) that extend both forward and rearward from the adapter mounting module (226).

8. A telecommunications panel assembly (210) according to claim 7, wherein each cable management structure (258) is removably mounted to the adapter mounting module (226) via a friction lock defined by a tapered portion (296) of the cable management structure (258) that cooperates with a tapered slot (298) of the adapter mounting module (226) to limit further insertion of the cable management structure (258).

9. A telecommunications panel assembly (210) according to claim 8, wherein each cable management structure (258) further includes a flex tab (292) configured to flex and abut the adapter mounting module (226) in latching the cable management structure (258) to the adapter mounting module (226).

## Patentansprüche

1. Telekommunikationsfeldanordnung (210), umfassend:
ein Gehäuse (214), das eine Vorderseite (216) umfasst, wobei das Gehäuse (214) ferner eine Oberseite (220), eine Unterseite (222) und zwei Seiten (224) definiert;
mehrere Adapterbefestigungsmodule (226), die an dem Gehäuse (214) an der Vorderseite (216) angebracht sind, wobei jedes Adapterbefestigungsmodul (226) eine erste Wand (254) definiert, die von einer zweiten gegenüberliegenden parallelen Wand (250) durch eine Öffnung (234) getrennt ist, und jedes Adapterbefestigungsmodul (226) mehrere Adapterbefestigungsorte definiert, die jeweils konfiguriert sind, mindestens einen Adapterblock (238), der mehrere Lichtwellenleiteradapter (236) in einer Einführrichtung definiert, verschiebbar aufzunehmen;
wobei jeder Adapterbefestigungsort einen flexiblen Auslegerarm (276) an der ersten Wand (254) zum Verriegeln mit dem mindestens einen Adapterblock (238) und einer entsprechenden dritten Wand (274) definiert, die sich senkrecht von der zweiten Wand (250) in Richtung des flexiblen Auslegerarms (276) erstreckt, die dritte Wand (274) einen Verkeilungsschlitz (288) zum Ausrichten des mindestens einen Adapterblocks (238) in der richtigen Ausrichtung zum Einsetzen in das Adapterbefestigungsmodul (226) definiert und die dritte Wand (274) auch eine Festanschlagfläche (286) definiert, um eine weitere Bewegung des mindestens einen Adapterblocks (238) in der Einführrichtung zu begrenzen, wobei
mindestens einer der Adapterbefestigungsorte derart konfiguriert ist, dass zwei benachbarte Adapterblöcke (238) den gleichen flexiblen Auslegerarm (276) an der ersten Wand (254) teilen können und sich die entsprechende dritte Wand (274) beim Verkeilen und Verriegeln der Adapterblöcke (238) mit dem Adapterbefestigungsmodul (226) senkrecht von der zweiten Wand (250) in Richtung des flexiblen Auslegerarms (276) erstrecken kann.

2. Telekommunikationsfeldanordnung (210) nach Anspruch 1, wobei der Verkeilungsschlitz (288) zwischen der zweiten Wand (250) des Adapterbefestigungsmoduls (226) und einer Querlasche definiert ist, welche die Festanschlagfläche (286) der dritten Wand definiert.

3. Telekommunikationsfeldanordnung (210) nach Anspruch 1, wobei die Einführrichtung im Allgemeinen parallel zu Adapterachsen (256) der mehreren Lichtwellenleiteradapter (236) des mindestens einen Adapterblocks (238) ist.

4. Telekommunikationsfeldanordnung (210) nach Anspruch 1, wobei mindestens eines der Adapterbefestigungsmodule (226) um eine horizontale Drehachse (242) schwenkbar angebracht ist, die sich parallel zu der Oberseite (220) und der Unterseite (222) und quer zu den Seiten (224) erstreckt, wobei das mindestens eine schwenkbare Adapterbefestigungsmodul (226) entweder in einer Aufwärts- oder einer Abwärtsrichtung drehbar ist.

5. Telekommunikationsfeldanordnung (210) nach Anspruch 1, wobei die mehreren Adapterbefestigungsmodule (226) ein oberes Modul (226a) und ein unteres Modul (226b) definieren, wobei mindestens eines von dem oberen Modul (226a) und dem unteren Modul (226b) von dem anderen von dem oberen Modul (226a) und dem unteren Modul (226b) wegschwenkbar ist und auch an einer Position, die linear von dem anderen von dem oberen Modul (226a) und dem unteren Modul (226b) beabstandet ist, repositionierbar ist.

6. Telekommunikationsfeldanordnung (210) nach Anspruch 5, wobei das obere Modul (226a) von dem unteren Modul (226b) wegschwenkbar ist und auch in einer angehobenen Position von dem unteren Modul (226b) repositionierbar ist, um den Zugang zu Adaptern (236) an einer Rückseite des unteren Moduls (226b) zu erleichtern.

7. Telekommunikationsfeldanordnung (210) nach Anspruch 1, ferner umfassend eine Kabelverwaltungsstruktur (258), die an jedem Adapterbefestigungsort angebracht ist, wobei jede Kabelverwaltungsstruktur (258) Kabelverwaltungsfinger (248) definiert, die sich von dem Adapterbefestigungsmodul (226) sowohl nach vorne als auch nach hinten erstrecken.

8. Telekommunikationsfeldanordnung (210) nach Anspruch 7, wobei jede Kabelverwaltungsstruktur (258) an dem Adapterbefestigungsmodul (226) mittels eines Reibverschlusses entfernbar angebracht ist, der durch einen sich verjüngenden Abschnitt (296) der Kabelverwaltungsstruktur (258) definiert ist, der mit einem sich verjüngenden Schlitz (298) des Adapterbefestigungsmoduls (226) zusammenwirkt, um ein weiteres Einführen der Kabelverwaltungsstruktur (258) zu begrenzen.

9. Telekommunikationsfeldanordnung (210) nach Anspruch 8, wobei jede Kabelverwaltungsstruktur (258) ferner eine Biegelasche (292) umfasst, die konfiguriert ist, sich beim Verriegeln der Kabelverwaltungsstruktur (258) mit dem Adapterbefestigungsmodul (226) zu biegen und an das Adapterbefestigungsmodul (226) anzulegen.

## Revendications

1. Ensemble panneau de télécommunications (210) comportant :
un châssis (214) comprenant un avant (216), le châssis (214) définissant en outre un dessus (220), un dessous (222) et deux côtés (224) ;
une pluralité de modules de montage d'adaptateur (226) montés sur le châssis (214) à l'avant (216), chaque module de montage d'adaptateur (226) définissant une première paroi (254) séparée d'une deuxième paroi parallèle à l'opposé (250) par une ouverture (234), chaque module de montage d'adaptateur (226) définissant une pluralité d'emplacements de montage d'adaptateur, chacun configuré pour recevoir de manière coulissante au moins un bloc d'adaptateur (238) définissant une pluralité d'adaptateurs à fibre optique (236) dans une direction d'insertion ;
dans lequel chaque emplacement de montage d'adaptateur définit un bras en porte-à-faux flexible (276) sur la première paroi (254) pour un verrouillage avec l'au moins un bloc d'adaptateur (238) et une troisième paroi correspondante (274) s'étendant perpendiculairement à partir de la deuxième paroi (250) vers le bras en porte-à-faux flexible (276), la troisième paroi (274) définissant une rainure de détrompage (288) pour l'orientation de l'au moins un bloc d'adaptateur (238) dans l'orientation correcte pour une insertion dans le module de montage d'adaptateur (226), la troisième paroi (274) définissant également une surface de butée positive (286) pour la limitation d'un mouvement supplémentaire de l'au moins un bloc d'adaptateur (238) dans la direction d'insertion, dans lequel
au moins un parmi les emplacements de montage d'adaptateur est configuré de sorte que deux blocs d'adaptateur adjacents (238) peuvent partager le même bras en porte-à-faux flexible (276) sur la première paroi (254) et la troisième paroi correspondante (274) s'étendant perpendiculairement à partir de la deuxième paroi (250) vers le bras en porte-à-faux flexible (276) lors du détrompage et du verrouillage des blocs d'adaptateur (238) sur le module de montage d'adaptateur (226).

2. Ensemble panneau de télécommunications (210) selon la revendication 1, dans lequel la rainure de détrompage (288) est définie entre la deuxième paroi (250) du module de montage d'adaptateur (226) et une languette transversale qui définit la surface de butée positive (286) de la troisième paroi.

3. Ensemble panneau de télécommunications (210) selon la revendication 1, dans lequel la direction d'insertion est généralement parallèle aux axes d'adaptateur (256) de la pluralité d'adaptateurs à fibre optique (236) de l'au moins un bloc d'adaptateur (238).

4. Ensemble panneau de télécommunications (210) selon la revendication 1, dans lequel au moins un parmi les modules de montage d'adaptateur (226) est monté de manière pivotante autour d'un axe de rotation horizontal (242) s'étendant parallèlement au dessus (220) et au dessous (222), et transversalement aux côtés (224), dans lequel l'au moins un module de montage d'adaptateur pivotant (226) peut tourner dans une direction soit vers le haut, soit vers le bas.

5. Ensemble panneau de télécommunications (210) selon la revendication 1, dans lequel la pluralité de modules de montage d'adaptateur (226) définit un module supérieur (226a) et un module inférieur (226b), dans lequel au moins un parmi le module supérieur (226a) et le module inférieur (226b) peut pivoter à l'écart de l'autre parmi le module supérieur (226a) et le module inférieur (226b) et est également repositionnable à une position espacée linéairement de l'autre parmi le module supérieur (226a) et le module inférieur (226b).

6. Ensemble panneau de télécommunications (210) selon la revendication 5, dans lequel le module supérieur (226a) peut pivoter à l'écart du module inférieur (226b) et est également repositionnable à une position relevée à partir du module inférieur (226b) pour la facilitation de l'accès à des adaptateurs (236) sur un côté arrière du module inférieur (226b) .

7. Ensemble panneau de télécommunications (210) selon la revendication 1, comprenant en outre une structure de gestion de câble (258) montée sur chaque emplacement de montage d'adaptateur, chaque structure de gestion de câble (258) définissant des doigts de gestion de câble (248) qui s'étendent à la fois vers l'avant et vers l'arrière à partir du module de montage d'adaptateur (226).

8. Ensemble panneau de télécommunications (210) selon la revendication 7, dans lequel chaque structure de gestion de câble (258) est montée de manière amovible sur le module de montage d'adaptateur (226) via un verrou de friction défini par une partie profilée (296) de la structure de gestion de câble (258) qui coopère avec une fente profilée (298) du module de montage d'adaptateur (226) pour limiter une insertion supplémentaire de la structure de gestion de câble (258).

9. Ensemble panneau de télécommunications (210) selon la revendication 8, dans lequel chaque structure de gestion de câble (258) comprend en outre une languette flexible (292) configurée pour s'infléchir et buter contre le module de montage d'adaptateur (226) en verrouillant la structure de gestion de câble (258) sur le module de montage d'adaptateur (226) .
